# EUROPÄISCHE PATENTANMELDUNG

(11) **EP 1 057 604 A1**
(43) Veröffentlichungstag der Anmeldung: **06.12.2000**
(21) Anmeldenummer: 00108856.6
(22) Anmeldetag: 26.04.2000
(51) Int. Cl.: B29B 7/74, B29B 7/02, B29B 7/18

(54) **Vorrichtung zur Verarbeitung von Kautschukmischungen**

(30) Priorität: 19.05.1999 DE 19923111
(71) Anmelder: Continental Aktiengesellschaft, 30165 Hannover (DE); Peter, Julius, Dr., 1130 Wien (AT)
(72) Erfinder: Peter, Julius, Dr., 1130 Wien (AT)
(74) Vertreter: Depmeyer, Lothar

(57) **Zusammenfassung**

Die Erfindung geht aus von einer Vorrichtung der obigen Art mit einem Stempelkneter zum Plastizieren der Grundmischung, einem stempellosen Kneter zum Abkühlen der Mischung und zum Einmischen der reaktiven Stoffe und ferner mit einem Aggregat zum Aufbereiten und Kühlen der Kautschukfertigmischung. Um den Stempelkneter besser nutzen zu können, ist aufgrund der Erfindung vorgesehen, dem Stempelkneter ein oder mehrere weitere stempellose Kneter zuzuordnen, die nacheinander vom Stempelkneter beschickt werden,und zudem ist vorgesehen, das Aggregat von jedem stempellosen Kneter aus zu beschicken.

## Beschreibung

Die Erfindung betrifft eine Vorrichtung zur Verarbeitung von vernetzungsmittelfreien Kautschukmischungen (Grundmischungen) zu Kautschukfertigmischungen mit einem Stempelkneter zum Plastizieren der Grundmischung, einem stempellosen Kneter zur Aufnahme der Grundmischung, zum Abkühlen dieser Mischung und zum Einmischen der reaktiven Stoffe und weiterhin mit einem Aggregat zum Kühlen und/oder Aufarbeiten der Kautschukfertigmischung.

Bei den bekannten Vorrichtungemn dieser Art ( EP-A-0 618 055 ) ist es möglich, das Plastizieren der kalten Mischung einerseits und das Einmischen der reaktiven Stoffe unter günstigen Temperaturbedingungen andererseits in verschidenen Knetern durchzuführen. Dadurch kann der mit dem Plastizieren verbundene Remillvorgang optimiert werden; anschliessend können die Vernetzungsmittel unter schonenden Temperaturbedingungen eingemischt und homogen verteilt werden.

Hiermit ist die Tatsache verbunden, dass beim Plastizieren im Stempelkneter zunächst eine kurzfristige Energiespitze durchlaufen wird. Hiernach fällt der Energieeintrag erheblich ab. Dabei zeigt es sich, dass - da im stempellosen Kneter die Grundmischung abgekühlt und die reaktiven Stoffe eingemischt werden müssen - im stempellosen Kneter ein vergleichsweise wesentlich längerer Zeitraum im Vergleich zum Prozess im Stempelkneter bzw. beim Plastizieren erforderlich ist. Es entsteht so ein Ungleichgewicht zwischen diesem Prozess und der nachfolgenden Behandlung im stempellosen Kneter. Ein grosser Teil der Kapazität des Stempelkneters liegt daher brach.

Der Erfindung liegt die Aufgabe zugrunde, eine Vorrichtung der eingangs erwähnten Art vorzuschlagen, die wirtschaftlicher arbeiten kann und den vorerwähnten Nachteil der teilweisen Unwirksamkeit des Stempelkneters nicht aufweist.

Zur Lösung dieser Aufgabe sind erfindungegemäss dem in Einzelanordnung vorgesehenen Stempelkneter ein oder mehrere weitere stempellose Kneter zugeordnet, die nacheinander von dem Stempelkneter aus beschickbar sind, und zudem ist das Aggregat von jedem stempellosen Kneter aus beschickbar. Zweckmässigerweise wird dabei jedoch nur ein (einziger) weiterer stempelloser Kneter benutzt; dadurch kann die Zykluszeit des Stempelkneters halbiert werden.

Zur Verwirklichung des Erfindungsgedankens können geeignete Transportmittel vorgesehen werden, um die Beschickung der stempellosen Kneter sicherzustellen. Es ist jedoch auch möglich, den Stempelkneter und die stempellosen Kneter relativ lateral zueinander verschiebbar anzuordnen, um eine Beschickung in fluchtender Anordnung des Stempelkneters zum jeweils benötigten stempellosen Kneter ausführen zu können. Analog können diese Massnahmen auch bei der Beschickung des Aggregates von den verschiedenen stempellosen Kneters aus angewendet werden.

Eine besonders einfache Vorrichtung ergibt sich jedoch bei zwei stempellosen Knetern dann, wenn bei einer ortsfesten Lagerung des Stempelkneters und der beiden stempellosen Kneter der Stempelkneter und das Aggregat senkrecht untereinander gelagert werden, während die beiden stempellosen Kneter in Bezug auf die senkrechte Mittelachse des Stempelkneters symmetrisch versetzt angeordnet werden.

Weitere Einzelheiten der Erfindung werden anhand der Zeichnung erläutert, in der Ausführungsbeispiele der Erfindung dargestellt sind. Es zeigen :
Fig. 1 eine Vorrichtung zur Verarbeitung von Kautschukgrundmischungen zu Kautschukfertigmischungen in schematischer Darstellung in der Ansicht und
Fig. 2 und 3 je die Vorrichtung gemäss Fig. 1 im Grundriss, jedoch jeweils in unterschiedlicher Ausführung der Vorrichtung.

Unter einem Stempelkneter 1 mit Stempel 2 befinden sich zwei stempellose Kneter 3, 4, die symmetrisch in Bezug auf die senkrechte Hauptachse des Stempelkneters 2 seitlich davon angeordnet sind und im Vergleich zum Stempelkneter 1 ein wesentlich grösseres Fasungsvermögen aufweisen. Unterhalb der beiden Kneter 3, 4 ist ein Aggregat 5 angeordnet, das der Kühlung und/oder Aufarbeitung der Fertigmischung ( z.B. in Form einer sog. Batch-Off-Anlage ) dient.

Diese Bestandteile der Vorrichtung sind in üblicher Weise aufgebaut und weisen bekannte Merkmale auf.

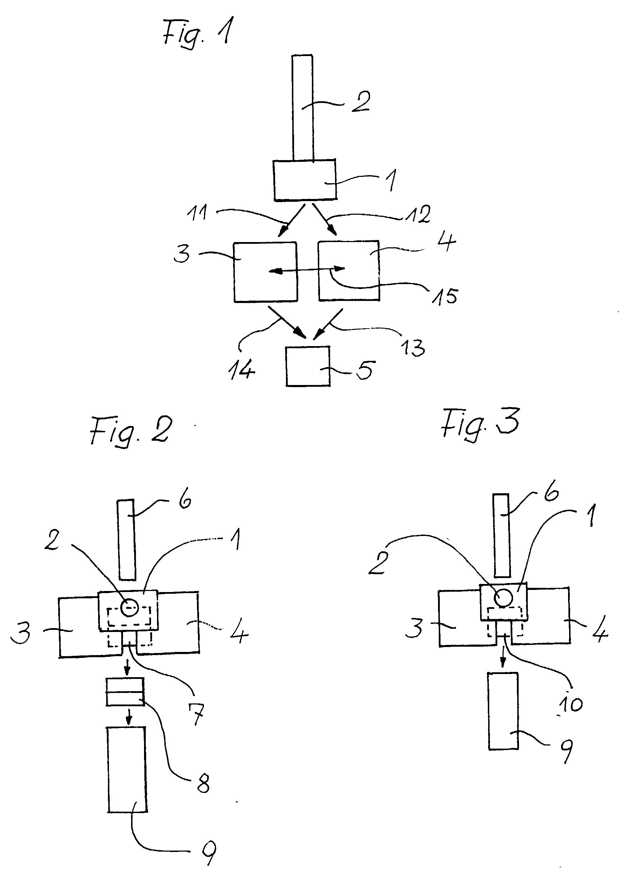

So können für die Vorrichtung die aus den Fig. 2 und 3 ersichtlichen Ausbildungen benutzt werden, jede Ausbildung jedoch mit einer dem Stempelkneter 1 vorgeschalteten Langbrückenwaage 6 od. dgl..

Bei der Ausführung gemäss Fig. 2 weist das Aggregat 5 ein Auffangwalzwerk 7 auf, von dem aus die Fertigmischung zu einem sog. Sheeterwalzwerk 8 geleitet wird, dem sich eine Batch-Off-Anlage 9 anschliesst.

Bei der Vorrichtung gemäss Fig. 3 ist im Bereich der senkrechten Hauptachse des Stempelkneters 1 ein Twin-Screw-Extruder 10 (Doppelschneckenextruder) installiert, von dem aus die Fertigmischung zur Batch-Off-Anlage 9 geführt wird.

Es versteht sich, dass das Aggregat 5 insg. gesehen die erforderlichen Kühl- und Aufarbeitseinrichtungen aufweisen muss, die ihrerseits in bekannter Weise und an sich beliebig ausgebildet sein können.

Für die Nutzung einer solchen Vorrichtung wird zunächst eine vernetzungsmittelfreie Kautschukmischung (Grundmischung) über die Langbrückenwaage 6 dem Stempelkneter 1 zugeleitet. Hier wird die kalte Kautschukmischung plastiziert und nach dem Hauptenergieeintrag dem Kneter 3 zugeleitet. Alsdann wird der Stempelkneter 1 erneut beschickt, um die zweite Charge dem stempellosen Kneter 4 zuführen zu können. Demgemäss ist die Zykluszeit des Stempelkneters 1 halb so gross im Vergleich zu den Knetern 3, 4 , die ihrerseits unabhängig voneinander nach Abkühlung der Kautschukmischung und Einmischen der Vernetzungsmittel ihre Chargen an das Aggregat 5 abgeben.

U.a. geht die Erfindung von der Überlegung aus, dass der Stempelkneter 1 zu Beginn des Plastizierens ein Maximum an Kneterleistung vollbringt, während die restliche Zykluszeit im Hinblick auf die Folgebehandlung des Kautschuks im stempellosen Kneter nur von untergeordneter Bedeutung ist.

Wie durch die Pfeile 11, 12 angedeutet ist, kann die plastizierte Grundmischung schräg zur Seite hin abgeführt werden, was durch Transportbänder, Leitbleche oder ähnliche Fördermittel erreicht werden kann. In analoger Weise kann die Fertigmischung im Sinne der Pfeile 13, 14 von den Knetern 3, 4 aus dem Aggregat 5 zugeführt werden.

Die Erfindung schliesst jedoch Querverschiebungen bzw. eine laterale Bewegung der Kneter 3, 4 im Sinne des Pfeiles 15 nicht aus, um die Kneter 3, 4 jeweils genau im Sinne der senkrechten Hauptachse des stempellosen Kneters 1 unterhalb dieses Kneters anzuordnen. In gleicher Weise können auch seitenverschiebbare Lagerungen zwischen den stempellosen Knetern 3, 4 und zumindest einem Bestandteil des Aggregates 5 vorgesehen werden.

## Patentansprüche

1. Vorrichtung zur Verarbeitung von vernetzungsmittelfreien Kautschukmischungen (Grundmischung) zu Kautschukfertigmischungen mit einem Stempelkneter zum Plastizieren der Grundmischung, einem stempellosen Kneter zur Aufnahme der Grundmischung, zum Abkühlen dieser Mischung und zum Einmischen der reaktiven Zusatzstofffe und weiterhin mit einem Aggregat zum Aufarbeiten und/oder Kühlen der Kautschukfertigmischung, wobei das Fassungsvermögen des Stempelkneters wesentlich kleiner ist als das Fassungsvermögen des stempellosen Kneters, dadurch gekennzeichnet, dass dem in Einzelanordnung vorgesehenen Stempelkneter (1) ein oder mehrere weitere stempellose Kneter (3,4) zugeordnet sind, die insg. nacheinander von dem Stempelkneter (1) beschickbar sind, und dass das Aggregat (5) von jedem stempellosen Kneter (3,4) aus beschickbar ist.

2. Vorrichtung nach Anspruch 1, dadurch gekennnzeichnet, dass die stempellosen Kneter (3,4) vorzugsweise symmetrisch in Bezug auf die senkrechte Mittelachse des Stempelkneters (1) seitlich versetzt sind.

3. Vorrichtung nach einem oder mehreren vorhergehenden Ansprüchen, dadurch gekennzeichnet, dass zwischen dem Stempelkneter (1) und den stempellosen Knetern (3,4) Fördermittel für die Kautschukmischung vorgesehen sind.

4. Vorrichtung nach einem oder mehreren vorhergehenden Ansprüchen, dadurch gekennzeichnet, dass zumindest zwischen einem Bestandteil des Aggregates (5) einerseits und dem stempellosen Knetern (3,4) andererseits Fördermitel für die Kautchukmischung vorgesehen sind.

5. Vorrichtung nach Anspruch 1, dadurch gekennzeichnet, dass bei zwei stempellosen Knetern (3,4) diese einerseits und der Stempelkneter (1) andererseits so aufeinander abgestimmt sind, dass die Zykluszeit des Stempelkneters (1) praktisch halb so gross ist im Vergleich zur Zykluszeit der beiden stempellosen Kneter.

6. Vorrichtung nach Anspruch 1, dadurch gekennzeichnet, dass zumindest ein Bestandteil des Aggregates (5) einerseits und/oder zumindest ein stempelloser Kneter (3,4) andererseits querverschiebbar gelagert sind in der Weise, dass der Bestandteil mit verschiedenen stempellosen Knetern in senkrechter Richtung zumindest in etwa fluchten kann.

7. Vorrichtung nach Anspruch 1, dadurch gekennzeichnet, dass die stempellosen Kneter (3,4) und/oder der Stempelkneter (1) lateral verschiebbar sind in der Weise, dass verschiedene stempellose Kneter mit dem Stempelkneter in senkrechter Richtung zumindest im wesentlichen fluchten können.
